# EUROPÄISCHE PATENTSCHRIFT

(11) **EP 2 743 675 B1**
(45) Veröffentlichungstag und Bekanntmachung des Hinweises auf die Patenterteilung: **13.03.2019**
(21) Anmeldenummer: 13196383.7
(22) Anmeldetag: 10.12.2013
(51) Int. Cl.: G01N 17/00, F28D 20/00

(54) **Prüfanlage mit Prüfkammer, Temperiereinheit und Pufferspeicher und Verfahren zum Betreiben derselben**
Testing device comprising test chamber, temperature control unit and heat storage, and method of operating such device
Installation de contrôle comprenant un chambre d'essai, un unité de régulation thermique et un accumulateur thermique, et procédé d'opération d'une telle installation

(30) Priorität: 11.12.2012 DE 102012112116
(43) Veröffentlichungstag der Anmeldung: 18.06.2014
(73) Patentinhaber: CTS Clima Temperatur Systeme GmbH, 72379 Hechingen (DE)
(72) Erfinder: Mayer, Bernhard, 72336 Balingen (DE)
(74) Vertreter: Hoeger, Stellrecht & Partner Patentanwälte mbB

(56) Entgegenhaltungen:
- WO-A1-01/19519
- CH-A- 218 733
- DE-A1- 2 650 686
- DE-B- 1 176 897
- US-A- 1 969 187
- US-A- 5 372 011
- US-A1- 2009 205 344
- US-B1- 6 460 355

## Beschreibung

Die Erfindung betrifft eine Prüfanlage umfassend eine Prüfkammer zur Aufnahme von zu testenden Objekten, in welcher mindestens eine Temperiereinheit für ein in Prüfkammer umgewälztes gasförmiges Prüfmedium vorgesehen ist, um das Prüfmedium entsprechend vorgebbaren Prüfzyklen aufzuheizen und abzukühlen.

Derartige Prüfanlagen sind aus dem Stand der Technik bekannt.

Bei diesen wird zur Durchführung der Prüfzyklen üblicherweise durch eine Heizung das Prüfmedium aufgeheizt und durch eine Kühleinheit wieder abgekühlt, wobei hierzu jeweils die gesamte zum Aufheizen verwendete Energie, insbesondere Wärme durch die Kühleinheit wieder an ein Kühlmedium, vorzugsweise Luft oder Wasser abgegeben wird.

Somit haben die bekannten Prüfanlagen einen hohen Energieverbrauch (insbesondere einen hohen elektrischen Energieverbrauch) und geben eine große Wärmemenge an die Umgebung ab.

Aus der Patentschrift US 6 460 355 B1 ist eine Prüfanlage mit einem Pufferspeicher innerhalb eines Wärmepumpenkreislaufs oder zweier Wärmepumpenkreisläufe zum Heizen und Kühlen der Prüfkammer bekannt.

Der Erfindung liegt daher die Aufgabe zugrunde, eine Prüfanlage der eingangs beschriebenen Art weiter zu verbessern, so dass deren Energieverbrauch zusätzlich reduziert werden kann.

Diese Aufgabe wird bei einer Prüfanlage der eingangs beschriebenen Art erfindungsgemäß durch die Merkmale des Anspruchs 1 gelöst, wobei der Temperiereinheit ein in einem Pufferkreislauf angeordneter Wärmeaustauscher zugeordnet ist, in dem Pufferkreislauf mindestens ein Pufferspeicher vorgesehen ist und mittels des Pufferkreislaufs beim Aufheizen des Prüfmediums dem der Temperiereinheit zugeordneten Wärmeaustauscher Wärme aus dem mindestens einen Pufferspeicher zugeführt wird und mittels des Pufferkreislaufs beim Abkühlen des Prüfmediums dem der Temperiereinheit zugeordneten Wärmeaustauscher Wärme entzogen und an den mindestens einen Pufferspeicher abgeführt wird. Der Vorteil der erfindungsgemäßen Lösung ist somit darin zu sehen, dass sich mit dem Pufferspeicher die Möglichkeit eröffnet, die Energie, insbesondere die Wärme, die erforderlich ist, um die Prüfzyklen zu fahren, nicht bei jedem Prüfzyklus an die Umwelt abzugeben, sondern die Energie, insbesondere die Wärme, zumindest zum Teil in dem Pufferspeicher zu speichern und somit für den nächsten Prüfzyklus zu verwenden.

Damit wird ein erheblicher Anteil der Energie, insbesondere der Wärme, die üblicherweise an die Umgebung abgegeben wird, bei den nachfolgenden Prüfzyklen wieder eingesetzt, so dass dadurch auch der Energieverbrauch der erfindungsgemäßen Prüfanlage gesenkt werden kann.

Die Erfindung sieht vor, dass in dem Pufferkreislauf eine Umwälzeinheit zum Umwälzen eines Wärmeträgermediums vorgesehen ist, welche die Möglichkeit eröffnet, effizient mit dem Wärmeträgermedium Wärme vom Pufferspeicher zum Wärmeaustauscher oder vom Wärmeaustauscher zum Pufferspeicher zu transportieren.

Hinsichtlich der Wärmespeicherkapazität des Pufferspeichers wurden bislang keine näheren Angaben gemacht.

Eine besonders vorteilhafte Lösung sieht jedoch vor, dass der mindestens eine Pufferspeicher bei einer Temperaturänderung von 10K oder weniger, noch besser 5K oder weniger, eine Wärmespeicherkapazität aufweist, die mindestens die Hälfte der Wärmespeicherkapazität der Prüfkammer mit der Temperiereinheit und der Wärmespeicherkapazität des zu testenden Objekts über die gesamte Temperaturdifferenz von der Minimaltemperatur bis zur Maximaltemperatur beträgt, da diese Wärmespeicherkapazitäten für den Energieverbrauch der Prüfanlage wesentlich sind und im Übrigen der Pufferspeicher ausreichend groß sein sollte, um ausreichend Wärme speichern zu können.

Hinsichtlich des Temperaturbereichs, in welchem der Pufferspeicher arbeitet, wurden bislang keine näheren Angaben gemacht.

So sieht eine vorteilhafte Lösung vor, dass der mindestens eine Pufferspeicher in einem Temperaturbereich arbeitet, der zwischen 20% und 80% der Temperaturdifferenz zwischen einer Minimaltemperatur und einer Maximaltemperatur der Prüfzyklen liegt.

Damit lässt sich ein wesentlicher Teil der für die Durchführung der Prüfzyklen erforderlichen Wärme speichern.

Noch vorteilhafter ist es, wenn der mindestens eine Pufferspeicher in einem Temperaturbereich arbeitet, der zwischen 30% und 70% der Temperaturdifferenz zwischen der Minimaltemperatur und der Maximaltemperatur der Prüfzyklen liegt.

Ein derart ausgebildeter Pufferspeicher lässt sich sehr einfach aufbauen und ausbilden.

Eine besonders einfach realisierbare Version der erfindungsgemäßen Lösung sieht vor, dass der mindestens eine Pufferspeicher in einem Temperaturbereich arbeitet, welcher zwischen 40% und 60% der Temperaturdifferenz zwischen der Minimaltemperatur und der Maximaltemperatur der Prüfzyklen liegt.

Hinsichtlich der Wärmespeicherung im Pufferspeicher wurden bislang keine näheren Angaben gemacht.

Eine besonders einfache Lösung sieht vor, dass in dem mindestens einen Pufferspeicher das Wärmeträgermedium als Wärmespeichermedium gespeichert ist, das heißt, dass in dem mindestens einen Pufferspeicher kein separates Wärmespeichermedium vorgesehen ist, sondern der Pufferspeicher eine ausreichende Größe hat, um eine ausreichend große Menge des Wärmeträgermediums aufzunehmen, das in diesem Fall gleichzeitig als Wärmespeichermedium dient.

Im einfachsten Fall lässt sich dabei der Pufferspeicher so ausbilden, dass dieser ein ausreichend großer Behälter zur Aufnahme des Wärmeträgermediums ist, wobei der Pufferspeicher in diesem Fall beispielsweise mit einer geringfügig variierenden Temperatur betrieben wird, welche in dem gesamten im Pufferspeicher gespeicherten Wärmeträgermedium vorliegt.

Alternativ dazu ist vorgesehen, dass der mindestens eine Pufferspeicher als Schichtspeicher ausgebildet ist, in welchem das Wärmeträgermedium in Schichten mit unterschiedlicher Temperatur gespeichert ist.

Ein derartiger Schichtspeicher lässt sich durch entsprechende Befüllung desselben mit Wärmeträgermedium bei verschiedenen Temperaturen realisieren, wobei dann die einzelnen Schichten des Wärmeträgermediums bei verschiedenen Temperaturen entsprechend ihren Temperaturen auch dem Wärmeaustauscher zugeführt werden müssen.

Eine andere vorteilhafte Lösung sieht vor, dass in dem mindestens einen Pufferspeicher als Wärmespeichermedium ein von dem Wärmeträgermedium verschiedenes Medium vorgesehen ist.

Ein derartiges Medium könnte beispielsweise ein festes, vom Wärmeträgermedium umströmtes und die Wärme speicherndes Medium sein.

Eine andere Möglichkeit wäre, dass das Wärmespeichermedium ein flüssiges, gasförmiges und/oder festes Medium ist, wobei der Wärmeaustausch zwischen dem flüssigen, gasförmigen und/oder festen Wärmespeichermedium und dem Wärmeträgermedium dann durch einen Wärmeaustauscher erfolgt, der von dem Wärmeträgermedium durchströmt ist.

Das Wärmespeichermedium kann beispielsweise eine Flüssigkeit, insbesondere Wasser, oder ein Gas, insbesondere Luft, sein, die Flüssigkeit oder das Gas können beispielsweise ihrerseits auch noch thermisch mit einem Festkörper gekoppelt sein, so dass dessen Wärmespeicherkapazität ebenfalls noch mit einbezogen ist.

Eine andere Lösung sieht vor, dass das Wärmespeichermedium ein Latentwärmespeichermedium ist, das in besonders einfacher Weise in der Lage ist, große Wärmemengen zu speichern, da in dem Latentwärmespeichermedium ein Phasenübergang zur Wärmespeicherung ausgenutzt wird.

Dabei ist vorzugsweise vorgesehen, dass der Phasenübergang des Latentwärmespeichermediums in dem Temperaturbereich liegt, in dem der mindestens eine Pufferspeicher betrieben wird.

Der der Temperiereinheit zugeordnete Wärmeaustauscher kann in unterschiedlichster Art und Weise angeordnet sein.

Eine Lösung sieht vor, dass der Wärmeaustauscher von einem Strom des gasförmigen Prüfmediums durchströmt ist.

Das heißt, dass der Wärmeaustauscher in der Prüfkammer angeordnet ist und somit direkt mit dem Strom des gasförmigen Prüfmediums in Wechselwirkung tritt, um an diesen entweder Wärme abzugeben oder von diesem Wärme aufzunehmen.

Alternativ dazu sieht eine weitere Möglichkeit vor, dass der Wärmeaustauscher einem Zwischenkreislauf der Temperiereinrichtung zugeordnet ist und dass eine Temperierung des Stroms des gasförmigen Prüfmediums durch den Zwischenkreislauf erfolgt.

Das heißt in diesem Fall steht der Wärmeaustauscher nicht direkt in Kontakt mit dem Strom des gasförmigen Prüfmediums sondern wärmt indirekt über den Zwischenkreislauf das gasförmige Prüfmedium auf, wobei der Wärmeaustauscher beispielsweise Teil des Zwischenkreislaufs ist oder in einem Wärmeaustauscher des Zwischenkreislaufs angeordnet ist.

Um die der Prüfkammer durch den Pufferkreislauf zugeführte Wärmemenge steuern zu können, ist vorzugsweise vorgesehen, dass der Pufferkreislauf mit Mengensteuerelementen versehen ist, mit welchen die Menge pro Zeiteinheit des den Wärmeaustauscher durchströmenden Wärmeträgermediums steuerbar ist.

Damit lässt sich die Aufwärm- oder Abkühlgeschwindigkeit des Prüfmediums in der Prüfkammer durch die Menge des den Wärmeaustauscher durchströmenden Wärmeträgermediums steuern.

Eine Lösung hierzu sieht vor, dass die Mengensteuerelemente eine drehzahlregelbare Umwälzeinheit des Pufferkreislaufs umfassen, so dass bereits durch die Drehzahl der Umwälzeinheit die Menge des pro Zeiteinheit den Wärmeaustauscher durchströmenden Wärmeträgermediums entsprechend der in der Temperiereinheit gewünschten Aufwärm- oder Abkühlgeschwindigkeit gesteuert werden kann.

Alternativ oder ergänzend hierzu ist vorgesehen, dass die Mengensteuerelemente eine Kurzschlussleitung und mindestens ein Ventil umfassen, mit welchem die pro Zeiteinheit mit dem Wärmeaustauscher wechselwirkende Menge des Wärmeträgermediums und die die Kurzschlussleitung durchströmende Menge des Wärmeträgermediums steuerbar sind.

Das heißt, dass mit dem mindestens einen Ventil die Möglichkeit besteht, die durch die Umwälzeinheit geförderte Menge des Wärmeträgermediums entweder durch den Wärmeaustauscher zu leiten oder unter Umgehung des Wärmeaustauschers durch die Kurzschlussleitung zu leiten, so dass je nach Aufteilung der Mengen des Wärmeträgermediums pro Zeiteinheit die dem Wärmeaustauscher zugeführte oder aus dem Wärmeaustauscher entnommene Wärmemenge pro Zeiteinheit steuerbar ist.

Vorzugsweise ist hierbei vorgesehen, dass die Mengensteuerelemente zur Regelung der Temperatur des Prüfmediums im Verlauf des Prüfzyklus mit einer Anlagensteuerung zusammenwirken, wobei eine Anlagensteuerung zur Regelung der Aufheizgeschwindigkeit oder Abkühlgeschwindigkeit die Mengensteuerelemente ansteuert.

Insbesondere ist dabei vorgesehen, dass die Anlagensteuerung eine Temperatur des in der Prüfkammer umgewälzten gasförmigen Prüfmediums erfasst.

Ferner ist vorzugsweise vorgesehen, dass die Anlagensteuerung zur Steuerung der Mengensteuerelemente eine Temperatur des dem Wärmeaustauscher zugeführten Wärmeträgermediums erfasst.

Im Zusammenhang mit der bisherigen Erläuterung der erfindungsgemäßen Prüfanlage wurde nicht näher erläutert, wie mit der Temperiereinheit Temperaturen erreichbar sein sollen, die niedriger als die Temperaturen des Wärmeträgermediums im Pufferkreislauf sind.

Aus diesem Grund ist vorzugsweise vorgesehen, dass mit der Temperiereinheit das gasförmige Prüfmedium kühlbar ist.

Beispielsweise ist vorgesehen, dass die Temperatureinheit mit einem Kühlkreislauf zusammenwirkt, um das gasförmige Kühlmedium zu temperieren.

Vorzugsweise erfolgt dies dadurch, dass der Temperiereinheit ein in dem Kühlkreislauf angeordneter Verdampfer zugeordnet ist.

Hinsichtlich der Anordnung des der Temperiereinheit zugeordneten Verdampfers wurden bislang keine näheren Angaben gemacht.

So sieht eine vorteilhafte Lösung vor, dass der Verdampfer von einem Strom des gasförmigen Prüfmediums durchströmt ist, so dass er in unmittelbarer Wechselwirkung mit dem Strom des gasförmigen Prüfmediums steht, um einen möglichst direkten Wärmeübergang zwischen dem Verdampfer und dem gasförmigen Prüfmedium zu erreichen.

Beispielsweise können der Verdampfer und der Wärmeaustauscher des Pufferkreislaufs separat in dem Strom des gasförmigen Prüfmediums angeordnet sein oder miteinander zu einer Einheit mit einem Pfad für Kältemittel und einem Pfad für Wärmeträgermedium kombiniert sein.

Alternativ dazu sieht eine andere Lösung vor, dass der Verdampfer einem Zwischenkreislauf der Temperiereinrichtung zugeordnet ist und dass eine Temperierung des Stroms des gasförmigen Prüfmediums durch den Zwischenkreislauf erfolgt.

Das heißt, dass keine unmittelbare Wechselwirkung zwischen dem Verdampfer und dem gasförmigen Prüfmedium besteht, sondern die Abkühlung des gasförmigen Prüfmediums unter Vermittlung des Zwischenkreislaufes erfolgt.

In diesem Fall kann der Verdampfer in einen Wärmeaustauscher der Temperiereinrichtung integriert sein oder in dem Zwischenkreislauf angeordnet sein.

Darüber hinaus wurde auch nicht näher spezifiziert, wie Temperaturen über der Temperatur des Wärmeträgermediums im Pufferkreislauf erreicht werden sollen.

Vorzugsweise ist hierzu vorgesehen, dass mit der Temperiereinheit das gasförmige Prüfmedium aufheizbar ist.

Erfindungsgemäß erfolgt dies dadurch, dass der Temperiereinheit eine Heizeinheit zugeordnet ist.

Hinsichtlich der Anordnung der Heizeinheit wurden bislang keine näheren Angaben gemacht.

So sieht eine vorteilhafte Lösung vor, dass die Heizeinheit von einem Strom des gasförmigen Prüfmediums durchströmt ist und somit in direktem Kontakt mit dem gasförmigen Prüfmediums steht, um dies möglichst verlustfrei aufzuheizen.

Alternativ dazu ist vorgesehen, dass die Heizeinheit einem Zwischenkreislauf der Temperiereinrichtung zugeordnet ist und dass eine Temperierung des Stroms des gasförmigen Prüfmediums durch den Zwischenkreislauf erfolgt.

In diesem Fall erfolgt somit die Aufheizung des gasförmigen Prüfmediums unter Vermittlung des Zwischenkreislaufs, vorzugsweise in einem Wärmeaustauscher des Zwischenkreislaufs, um das Zwischenwärmeträgermedium desselben aufzuheizen.

Im Zusammenhang mit der bisherigen Erläuterung der einzelnen Ausführungsbeispiele wurde nicht näher darauf eingegangen, welches Wärmeträgermedium in dem Pufferkreislauf eingesetzt werden soll.

Um bei Temperaturen unter dem Gefrierpunkt und bei Temperaturen, die nahe dem Siedepunkt des Wassers liegen, arbeiten zu können, ist es erforderlich, dass das Wärmeträgermedium im Pufferkreislauf bei der Minimaltemperatur des Prüfzyklus noch flüssig ist und bei der Maximaltemperatur des Prüfzyklus möglichst nicht verdampft.

Beispielsweise könnte dies durch eine ölähnliche Substanz realisiert werden. Eine andere vorteilhafte Lösung sieht vor, dass das Wärmeträgermedium des Pufferkreislaufs eine Mischung aus Wasser und Glykol umfasst.

Zum Betrieb der erfindungsgemäßen Prüfanlage wurden bislang keine näheren Angaben gemacht.

Grundsätzlich ist es denkbar, die Prüfanlage manuell zu steuern.

Vorteilhaft ist es jedoch, wenn eine Anlagensteuerung vorgesehen ist, welche die Heizeinheit, den Kühlkreislauf und den Pufferkreislauf, insbesondere automatisch entsprechend einem Steuerprogramm, steuert.

Dabei könnte beim Aufheizen eine Wärmezufuhr von der Heizeinheit gleichzeitig mit einer Wärmezufuhr durch den Pufferkreislauf erfolgen.

Eine besonders günstige Lösung sieht jedoch vor, dass die Anlagensteuerung zum Aufheizen des Stroms des Prüfmediums ausgehend von der Minimaltemperatur des Prüfzyklus zuerst den Pufferkreislauf aktiviert und mit diesem Wärme aus dem Pufferspeicher über den Wärmeaustauscher dem Strom des Prüfmediums zuführt, insbesondere ohne dass die Heizeinheit aktiviert ist.

Zweckmäßigerweise ist dabei vorgesehen, dass die Anlagensteuerung beim Aufheizen des Stroms des Prüfmediums die Heizeinheit frühestens dann aktiviert, wenn eine Temperatur des dem Wärmeaustauscher zugeführten Wärmeträgermediums weniger als 20K, insbesondere weniger als 10K, vorzugsweise weniger als 5K, über der Temperatur des Stroms des Prüfmediums liegt.

Ferner ist dabei vorgesehen, dass die Anlagensteuerung beim Aufheizen des Stroms des Prüfmediums die Heizeinheit spätestens dann aktiviert, wenn eine Temperatur des dem Wärmeaustauscher zugeführten Wärmeträgermediums 1K, vorzugsweise 3K oder sogar 5K, über der Temperatur des Stroms des Prüfmediums liegt.

Auch beim Abkühlen könnte die Kühleinheit gleichzeitig mit dem Pufferspeicher eingesetzt werden.

Energetisch günstiger ist es jedoch, wenn die Anlagensteuerung zum Abkühlen des Stroms des Prüfmediums ausgehend von der Maximaltemperatur des Prüfzyklus zuerst den Pufferkreislauf aktiviert und mit diesem Wärme aus dem Strom des Prüfmediums über den Wärmeaustauscher aufnimmt und dem Pufferspeicher zuführt, insbesondere ohne dass der Kühlkreislauf aktiviert ist. Insbesondere ist dabei vorgesehen, dass die Anlagensteuerung beim Abkühlen des Stroms des Prüfmediums den Kühlkreislauf frühestens dann aktiviert, wenn eine Temperatur des dem Wärmeaustauscher zugeführten Wärmeträgermediums weniger als 20K, insbesondere weniger als 10K, vorzugsweise weniger als 5K, unter der Temperatur des Stroms des Prüfmediums liegt. Insbesondere ist dabei vorgesehen, dass die Anlagensteuerung beim Abkühlen des Stroms des Prüfmediums den Kühlkreislauf spätestens dann aktiviert, wenn eine Temperatur des dem Wärmeaustauscher zugeführten Wärmeträgermediums 1K, vorzugsweise 3K oder sogar 5K, unter der Temperatur des Stroms des Prüfmediums liegt.

Darüber hinaus betrifft die Erfindung ein Verfahren zum Betreiben einer Prüfanlage mit einer Prüfkammer zur Aufnahme von zu testenden Objekten, in welcher ein gasförmiges Prüfmedium umgewälzt und mittels einer Temperiereinheit entsprechend vorgebbaren Prüfzyklen aufgeheizt und abgekühlt wird.

Bei einem derartigen Verfahren nach Anspruch 15 ist zur Lösung der eingangs genannten Aufgabe erfindungsgemäß vorgesehen, dass dem gasförmigen Prüfmedium beim Abkühlen Wärme entzogen und in einem Pufferspeicher gespeichert wird und dass dem gasförmigen Prüfmedium beim Aufwärmen Wärme aus dem Pufferspeicher zugeführt wird.

Der Vorteil der erfindungsgemäßen Lösung ist ebenfalls der, dass diese einerseits den Energieverbrauch beim Betreiben der Prüfanlage senkt und andererseits unerwünschte Abwärme reduziert.

Dabei ist vorgesehen, dass zum Transport der Wärmeenergie zwischen dem Pufferspeicher und dem gasförmigen Prüfmedium ein Pufferkreislauf eingesetzt wird und dass in dem Pufferkreislauf zusätzlich zu dem Pufferspeicher ein Wärmeaustauscher vorgesehen ist, der der Temperiereinheit zugeordnet ist.

Der besondere Vorteil des erfindungsgemäßen Verfahrens liegt darin, dass das Wärmeträgermedium im Prüfkreislauf bei der Minimaltemperatur des Prüfzyklus noch flüssig ist und bei der Maximaltemperatur des Prüfzyklus möglichst nicht verdampft.

Mit einem derartigen Pufferkreislauf und in einem der Puffereinheit zugeordneten Wärmeaustauscher lässt sich in einfacher Weise die Wärme von der Temperiereinheit zum Pufferspeicher oder vom Pufferspeicher zur Temperiereinheit transportieren.

Darüber hinaus ist vorzugsweise vorgesehen, dass bei jedem Prüfzyklus dem Prüfmedium entzogene Wärme in dem Pufferspeicher bei einer Puffertemperatur gespeichert wird, die zwischen der Maximaltemperatur und der Minimaltemperatur des Prüfzyklus liegt.

Weitere Merkmale und Vorteile der Erfindung sind Gegenstand der nachfolgenden Ansprüche sowie der zeichnerischen Darstellung einiger Ausführungsbeispiele.

In der Zeichnung zeigen:
- Fig. 1: eine schematische Darstellung eines ersten Ausführungsbeispiels einer erfindungsgemäßen Prüfanlage;
- Fig. 2: eine schematische Darstellung eines Verlaufs eines Prüfzyklus bei dem ersten Ausführungsbeispiel der erfindungsgemäßen Prüfanlage;
- Fig. 3: eine schematische Darstellung eines zweiten Ausführungsbeispiels einer erfindungsgemäßen Prüfanlage;
- Fig. 4: eine schematische Darstellung eines dritten Ausführungsbeispiels einer erfindungsgemäßen Prüfanlage;
- Fig. 5: eine schematische Darstellung eines vierten Ausführungsbeispiels einer erfindungsgemäßen Prüfanlage;
- Fig. 6: eine schematische Darstellung eines fünften Ausführungsbeispiels einer erfindungsgemäßen Prüfanlage;
- Fig. 7: eine schematische Darstellung eines sechsten Ausführungsbeispiels einer erfindungsgemäßen Prüfanlage;
- Fig. 8: eine schematische Darstellung eines siebten Ausführungsbeispiels einer erfindungsgemäßen Prüfanlage und
- Fig. 9: eine schematische Darstellung eines achten Ausführungsbeispiels einer erfindungsgemäßen Prüfanlage;

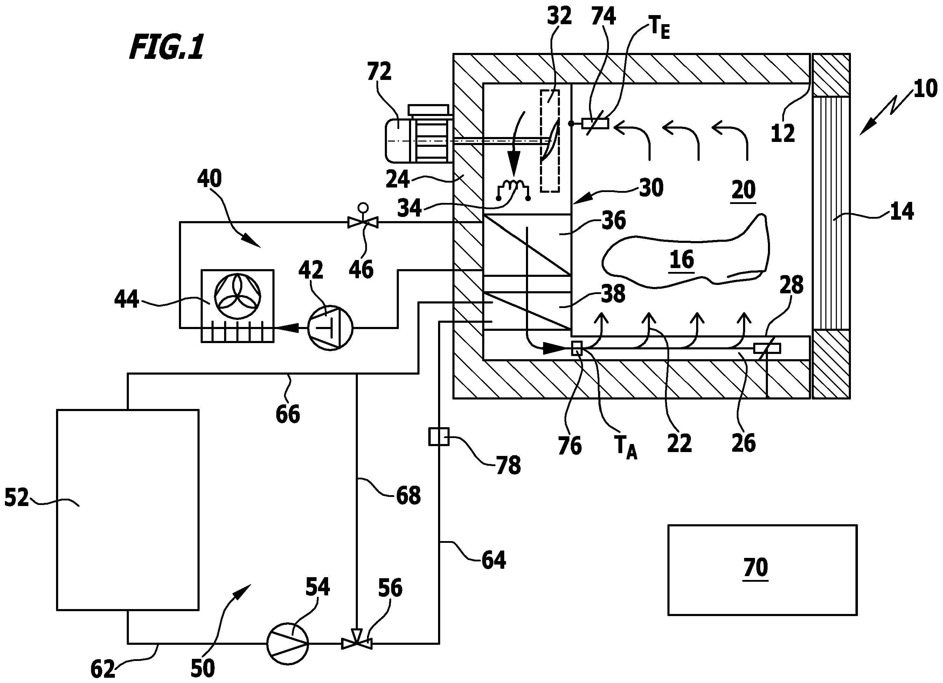

Ein in Fig. 1 dargestelltes Ausführungsbeispiel einer erfindungsgemäßen Prüfanlage umfasst eine als Ganzes mit 10 bezeichnete Prüfkammer, deren Prüfkammeröffnung 12 durch eine Tür 14 verschließbar ist, wobei durch die Prüfkammeröffnung 12 ein zu prüfendes Objekt 16 in einem Prüfraum 20 der Prüfkammer 10 positionierbar ist, um dieses Objekt Temperatur- und/oder Klimaprüfungen zu unterziehen.

Hierzu wird in dem Prüfraum 20 ein Strom 22 von einem gasförmigen Prüfmedium umgewälzt, wobei der Strom 22 einerseits das Objekt 16 im Prüfraum 20 umströmt und andererseits eine als Ganzes in der Prüfkammer 10 neben dem Prüfraum 20 vorgesehene Temperiereinheit 30 durchströmt, die vorzugsweise vor einer der Prüfkammeröffnung 12 gegenüberliegenden Rückwand 24 der Prüfkammer 10 angeordnet ist und ein Umwälzgebläse 32 aufweist, welches den Strom 22 des gasförmigen Prüfmediums aus dem Prüfraum 20 ansaugt und diesen durch die Temperiereinheit 30 hindurchströmen lässt, so dass der Strom 22 beispielsweise über einen unter einem Boden 28 des Prüfraums 20 angeordneten Verteilraum 26 verteilt wird und bodenseitig des Prüfraums 20 in diesen eintritt, um das zu prüfende Objekt 16 zu umströmen und längs einer Deckelwand dann wiederum in Richtung des Umwälzgebläses 32 strömt.

Um den Strom 22 des gasförmigen Mediums in der Temperiereinheit 30 aufheizen und kühlen zu können, ist gemäß dem Stand der Technik in der Temperiereinheit 30 eine Heizeinheit 34 vorgesehen, welche beispielsweise einen elektrisch betriebenen Elektroheizer umfasst, wobei die Heizeinheit von dem Strom 22 des Prüfmediums in der Temperiereinheit 30 umströmt oder durchströmt wird.

Ferner strömt der Strom 22 des Prüfmediums beispielsweise bei diesem Ausführungsbeispiel durch einen Verdampfer 36, der in einem als Ganzes mit 40 bezeichneten Kühlkreislauf angeordnet ist.

Der Kühlkreislauf 40 umfasst dabei neben dem Verdampfer 36 einen Kältemittelverdichter 42, welcher aus dem Verdampfer 36 kommendes und verdampftes Kältemittel verdichtet sowie einen Verflüssiger 44 zuführt, in welchem das verdichtete Kältemittel gekühlt wird, so dass dieses verflüssigt wird.

Von dem Verflüssiger 44 strömt dann das verflüssigte Kältemittel zu einem Drosselorgan 46, mit welchem die Verdampfung des Kältemittels im Verdampfer 36 steuerbar, vorzugsweise regelbar, ist.

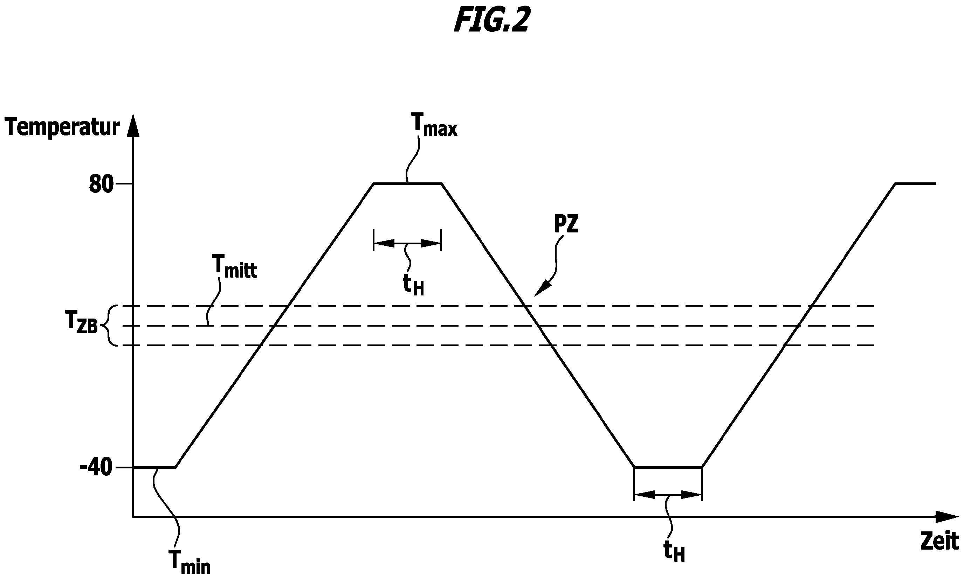

Mit der Heizeinheit 34 und dem Verdampfer 36 ist die Temperiereinheit 30 in bekannter Art und Weise in der Lage entweder den Strom 22 des gasförmigen Prüfmediums aufzuheizen oder abzukühlen, so dass das zu prüfende Objekt 16 entsprechend einem in Fig. 2 dargestellten Prüfzyklus von insbesondere mehreren Prüfzyklen von einer Minimaltemperatur Tₘᵢₙ auf eine Maximaltemperatur Tₘₐₓ aufgeheizt und anschließend wieder auf die Minimaltemperatur Tₘᵢₙ abgekühlt werden kann usw., wobei beispielsweise das Objekt 16 bei der jeweiligen Minimaltemperatur Tₘᵢₙ oder der jeweiligen Maximaltemperatur Tₘₐₓ während einer Haltezeit t_{H} gehalten wird, um eine zuverlässige Temperierung des Objekts 16 bei der jeweiligen Minimaltemperatur Tₘᵢₙ oder Maximaltemperatur Tₘₐₓ zu erreichen.

Das Durchlaufen von einem derartigen, in Fig. 2 dargestellten Prüfzyklus PZ macht es erforderlich, der Prüfanlage beim Aufheizen große Mengen an Wärmeenergie zuzuführen und beim Abkühlen wieder aus dieser abzuführen.

Zur Steigerung der Energieeffizienz sieht ein in Fig. 1 dargestelltes erstes Ausführungsbeispiel der erfindungsgemäßen Lösung vor, dass die Temperiereinheit 30 einen von dem Strom 22 des gasförmigen Prüfmediums durchströmten Wärmeaustauscher 38 umfasst, welcher in einem Pufferkreislauf 50 angeordnet ist, wobei der Pufferkreislauf 50 einen Pufferspeicher 52 sowie eine Umwälzpumpe 54 und beispielsweise ein Dreiwegeventil 56 oder eine äquivalente Ventilanordnung umfasst.

Dabei kann der Wärmeaustauscher 38 eine separate, im Strom 22 des gasförmigen Prüfmediums angeordnete Einheit sein oder mit dem Verdampfer zu einer Einheit kombiniert sein.

Die Umwälzpumpe 54 ist dabei so angeordnet, dass sie mit einer Saugleitung 62 ein Wärmeträgermedium aus dem Pufferspeicher 52 ansaugt und dieses dem Dreiwegeventil 56 zuführt, wobei das Dreiwegeventil 56 in der Lage ist, das zugeführte Wärmeträgermedium entweder einer Wärmeaustauscherzuleitung 64 zuzuführen, welche das Wärmeträgermedium zum Wärmeaustauscher 38 führt, so dass dieses den Wärmeaustauscher 38 durchströmen und über eine Wärmeaustauscherrückleitung 66 wieder in den Pufferspeicher 52 zurückströmen kann. Ferner ist das Dreiwegeventil 56 in der Lage, das von der Umwälzpumpe 54 zugeführte Wärmeträgermedium ganz oder zum Teil in eine Kurzschlussleitung 68 zwischen dem Dreiwegeventil 56 und der Wärmeaustauscherrückleitung 66 eintreten zu lassen, so dass in diesem Fall das Wärmeträgermedium nicht den Wärmeaustauscher 38 durchströmt, sondern direkt über die Wärmeaustauscherrückleitung 66 zum Pufferspeicher 52 zurückströmt.

Das Dreiwegeventil 56 und die Kurzschlussleitung 68 dienen dazu, eine Möglichkeit zur Steuerung der den Wärmeaustauscher 38 durchströmenden Menge des Wärmeträgermediums pro Zeiteinheit zu erreichen, um die durch den Wärmeaustauscher 38 mögliche Abkühl- und Aufheizgeschwindigkeit für den Strom 22 des Prüfmediums steuern zu können.

Ergänzend oder alternativ kann die Mengenregelung durch eine Drehzahlregelung der Umwälzpumpe 54 erfolgen.

Die gesamte Prüfanlage wird gesteuert durch eine Anlagensteuerung 70, welche in der Lage ist, die Heizeinheit 34, den Kühlkreislauf 40, sowie auch den Pufferkreislauf 50, und dabei insbesondere die Umwälzpumpe 54 und das Dreiwegeventil 56, automatisch entsprechend einem vorgegebenen Programmablauf zu steuern. Darüber hinaus erfolgt noch eine Ansteuerung eines Motors 72 für das Umwälzgebläse 32.

Zur exakten Temperaturführung des Stroms 22 des gasförmigen Prüfmediums ist in dem Strom 22 des gasförmigen Prüfmediums am Eintritt desselben in die Temperiereinheit 30 ein erster Temperatursensor 74 vorgesehen, der eine Eintrittstemperatur T_{E} misst, und am Austritt des Stroms 22 des gasförmigen Prüfmediums einen zweiten Temperatursensor 76, der eine Austrittstemperatur T_{A} misst, die beide mit der Anlagensteuerung 70 zusammenwirken, um die Temperatur und eine Temperaturdifferenz zwischen T_{E} und T_{A} und somit das Aufheizen oder Abkühlen des gasförmigen Prüfmediums durch die Anlagensteuerung 70 erfassen zu können. Außerdem ist ein Temperatursensor 78 zur Messung der Temperatur des in den Wärmeaustauscher 38 eintretenden Wärmeträgermediums vorgesehen.

Bei der erfindungsgemäßen Lösung gemäß dem ersten Ausführungsbeispiel ist das Wärmeträgermedium im Pufferspeicher 52 auch gleichzeitig das Wärmespeichermedium und liegt beispielsweise bei einer Temperatur TP vor, die innerhalb eines Zwischentemperaturbereich T_{ZB} liegt, der in Fig. 2 angegeben ist, und der sich um eine Mitteltemperatur Tₘᵢₜₜ ausdehnt, beispielsweise sich beiderseits der Mitteltemperatur Tₘᵢₜₜ ausdehnt.

Bei dem dargestellten Ausführungsbeispiel liegt beispielsweise die Minimaltemperatur Tₘᵢₙ bei -40°C und die Maximaltemperatur Tₘₐₓ bei 80°C, so dass die Mitteltemperatur Tₘᵢₜₜ bei + 20°C liegt und beispielsweise der Zwischentemperaturbereich T_{ZB} von +15°C bis +25°C reicht.

Wird nun bei einer derartigen, in Fig. 1 und 2 dargestellten Prüfanlage das Objekt 16 von der Minimaltemperatur Tₘᵢₙ auf die Maximaltemperatur Tₘₐₓ aufgeheizt, wird von der Anlagensteuerung 70 zum Aufheizen des Stroms 22 des Prüfmediums ausgehend von der Minimaltemperatur Tₘᵢₙ des Prüfzyklus PZ zuerst der Pufferkreislauf 50 aktiviert und mit diesem Wärme aus dem Pufferspeicher 52 über den Wärmeaustauscher 38 dem Strom 22 des Prüfmediums zuführt. Das heißt, das Aufheizen beginnt mit der Minimaltemperatur Tₘᵢₙ nicht durch Einschalten der Heizeinheit 34, sondern durch Umwälzen des Wärmeträgermediums in dem Pufferkreislauf 50, wodurch das bei der Puffertemperatur TP vorliegende Wärmeträgermedium durch die Umwälzpumpe 54 und die Wärmeaustauscherzuleitung 64 in den Wärmeaustauscher 38 gefördert wird, diesen durchströmt und dabei den den Wärmeaustauscher 38 durchsetzenden Strom 22 des Prüfmediums aufheizt.

Dabei wird die Aufheizgeschwindigkeit von der Anlagensteuerung 70 durch eine Steuerung der Drehzahl der Umwälzpumpe 54, und über das Dreiwegeventil 56 gesteuert, mit welchem die Möglichkeit besteht, die Menge des pro Zeiteinheit den Wärmeaustauscher 38 durchströmenden Wärmeträgermediums zu steuern, wobei die Steuerung durch das Dreiwegeventil 56 bis zu kleinen Fördermengen, beispielsweise im einstelligen Prozentbereich der Maximalfördermenge, möglich ist. Diese kleinen Fördermengen können insbesondere nur durch das Dreiwegeventil 56 einfach gesteuert werden, welches einen Teil der von der Umwälzpumpe 54 gelieferten Fördermenge über die Kurzschlussleitung 68 direkt der Wärmeaustauscherrückleitung 66 zuführt und somit nicht durch den Wärmeaustauscher 38 hindurchströmen lässt, so dass eine sehr präzise Regelung auch kleiner, den Wärmeaustauscher 38 durchströmender Mengen von Wärmeträgermedium pro Zeiteinheit mit dem Dreiwegeventil 56 und der Kurzschlussleitung 68 möglich ist.

Da sich das Wärmeträgermedium auf der Puffertemperatur TP von ungefähr 20°C befindet, besteht die Möglichkeit, den Strom 22 des Prüfmediums in der Prüfkammer 10 ausschließlich mit dem Wärmeträgermedium des Pufferspeichers 52 bis auf eine Temperatur im Bereich von 20°C, also im Bereich der Mitteltemperatur Tₘᵢₜₜ aufzuheizen.

Die Anlagensteuerung 70 aktiviert beim Aufheizen des Stroms 22 des Prüfmediums die Heizeinheit 34 spätestens dann, wenn eine Temperatur des dem Wärmeaustauscher 38 zugeführten Wärmeträgermediums weniger als 10K, noch besser weniger als 5K, über der Temperatur des Stroms 22 des Prüfmediums liegt, und beispielsweise ab 20°C schaltet die Anlagensteuerung 70 den Pufferkreislauf 50 ab und die Heizeinheit 34 ein, so dass die zum Aufheizen des Prüfmediums von 20°C auf 80°C erforderliche Wärmeenergie über die Heizeinheit 34 zugeführt wird.

Bei Erreichen der Maximaltemperatur Tₘₐₓ regelt die Anlagensteuerung 70 wiederum die Heizeinheit 34 so, dass die Maximaltemperatur Tₘₐₓ während der Haltezeit t_{H} gehalten wird.

Zum nachfolgenden Abkühlen des Stroms 22 des Prüfmediums in der Prüfkammer 10 ausgehend von der Maximaltemperatur Tₘₐₓ aktiviert die Anlagensteuerung 70 zuerst den Pufferkreislauf 50 um mit diesem Wärme aus dem Strom 22 des Prüfmediums über den Wärmeaustauscher 38 aufzunehmen und dem Pufferspeicher 52 zuzuführen, das heißt, es erfolgt ebenfalls wieder zunächst nur ein Einschalten des Pufferkreislaufs 50 seitens der Anlagensteuerung 70, der, da die Puffertemperatur TP in der Größenordnung von 20°C liegt, in der Lage ist, den Strom 22 des Prüfmediums von der Maximaltemperatur Tₘₐₓ bis ungefähr zur Mitteltemperatur Tₘᵢₜₜ abzukühlen, wobei ebenfalls wiederum die den Wärmeaustauscher 38 durchströmende Menge des Wärmeträgermediums pro Zeiteinheit im Pufferkreislauf 50 durch das Dreiwegeventil 56 und gegebenenfalls auch durch Drehzahlregelung der Umwälzpumpe 54 seitens der Anlagensteuerung 70 steuerbar ist, um eine vorgegebene Abkühlgeschwindigkeit, also eine vorgegebene Absenkung der Temperatur pro Zeiteinheit, einzuhalten.

Die Anlagensteuerung 70 aktiviert beim Abkühlen des Stroms 22 des Prüfmediums den Kühlkreislauf 40 spätestens dann, wenn eine Temperatur des dem Wärmetauscher 38 zugeführten Wärmetransportmediums weniger als 10K, vorzugsweise weniger als 5K, unter der Temperatur des Stroms 22 des Prüfmediums liegt.

Sobald eine Abkühlung des Stroms 22 des Prüfmediums in der Prüfkammer 10 auf die Mitteltemperatur Tₘᵢₜₜ bei ungefähr 20°C erfolgt ist, schaltet die Anlagensteuerung 70 des Pufferkreislaufs 50 ab und kühlt den Strom 22 des Prüfmediums weiter mit dem Verdampfer 36 bei eingeschaltetem Kältekreislauf 40, wobei der Kältemittelverdichter 42 das Kältemittel verdichtet, das wiederum in dem Verflüssiger 44 verflüssigt wird und durch das Drosselorgan 46 wieder verdampft wird, um dann im Verdampfer 36 wiederum dem Strom 22 des Prüfmediums Wärme zu entziehen.

Bei der beschriebenen Lösung wird somit bei jedem Prüfzyklus PZ nur ein Teil der für die Abkühlung oder Aufheizung erforderlichen Energie der Prüfanlage zugeführt und auch nur ein Teil der für die Abkühlung oder Aufheizung erforderlichen Wärmemenge über den Verflüssiger 44 nach außen abgegeben, während der andere Teil der Wärmeenergie durch das Wärmeträgermedium im Pufferspeicher 52 bei der Puffertemperatur TP gespeichert und im nachfolgenden Zyklus wiederum zum Aufheizen des Stroms 22 des Prüfmediums verwendet wird.

Bei dem ersten Ausführungsbeispiel wird zweckmäßigerweise als Wärmeträgermedium im Pufferkreislauf 50 eine Mischung aus Wasser und Glykol eingesetzt.

Es besteht aber auch beispielsweise die Möglichkeit, ein Öl oder ein anderes Medium einzusetzen, sofern dieses einerseits bei der Minimaltemperatur, beispielsweise bei -40°C, noch ausreichend flüssig ist und andererseits bei der Maximaltemperatur, beispielsweise bei +80°C oder wenn höhere Maximaltemperaturen, wie z.B. 140°C erforderlich sind, bei diesen Temperaturen, noch nicht die Tendenz hat, zu verdampfen.

Es besteht auch die Möglichkeit, das Wärmeträgermedium im Pufferkreislauf unter einem Druck zu halten der höher ist als ein entsprechender Dampfdruck des Wärmeträgermediums.

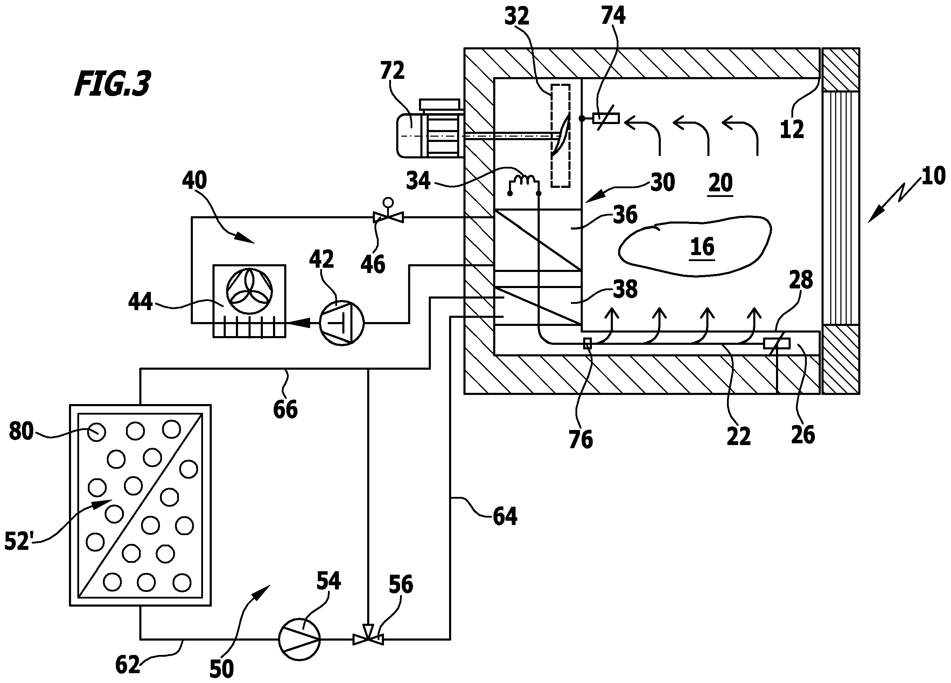

Bei einem zweiten Ausführungsbeispiel der erfindungsgemäßen Lösung, dargestellt in Fig. 3, ist der Pufferspeicher 52 so ausgebildet, dass dieser einerseits vom Wärmeträgermedium durchströmt ist und andererseits in dem Pufferspeicher 52' ein Latentwärmespeichermedium 80 angeordnet ist, das beispielsweise von dem Wärmeträgermedium im Pufferkreislauf 50 umströmt ist, um einen guten Wärmeübergang zwischen dem Latentwärmespeichermedium 80 und dem Wärmeträgermedium im Pufferkreislauf 50 sicherzustellen.

Das Latentwärmespeichermedium 80 ist dabei so auszuwählen, dass dieses eine Schmelztemperatur hat, die in etwa der Mitteltemperatur Tₘᵢₜₜ, insbesondere einer bis zu 10K von der Mitteltemperatur Tₘᵢₜₜ abweichenden Temperatur entspricht, so dass der Phasenübergang des Latentwärmespeichermediums 80 bei etwa der Mitteltemperatur Tₘᵢₜₜ erfolgt.

Durch das Vorsehen des von dem Wärmeträgermedium umströmten Latentwärmespeichermediums 80 in dem Pufferspeicher 52' lässt sich die Wärmespeicherkapazität des Pufferspeichers 52' signifikant steigern und somit der Pufferspeicher 52' wesentlich kleiner ausführen als beim ersten Ausführungsbeispiel.

Im Übrigen funktioniert das zweite Ausführungsbeispiel gemäß Fig. 3 in gleicher Weise wie das erste Ausführungsbeispiel, allerdings mit dem Unterschied, dass beim Erwärmen des Stroms 22 des gasförmigen Prüfmediums das Latentwärmespeichermedium 80 in den festen Zustand übergeht und damit Wärme abgibt, die von dem Wärmeträgermedium in den Wärmeaustauscher 38 transportiert wird und zum Aufheizen des Stroms 22 des gasförmigen Prüfmediums führt.

Soll dagegen der Strom 22 des gasförmigen Prüfmediums abgekühlt werden, so erwärmt das umgewälzte Wärmeträgermedium das Latentwärmespeichermedium 80 und schmilzt dieses auf, wodurch dem Wärmeträgermedium Wärme entzogen wird, so dass das Wärmeträgermedium abgekühlt wird und auch über den Wärmeaustauscher 38 in der Temperiereinheit 30 Wärme aufnehmen kann.

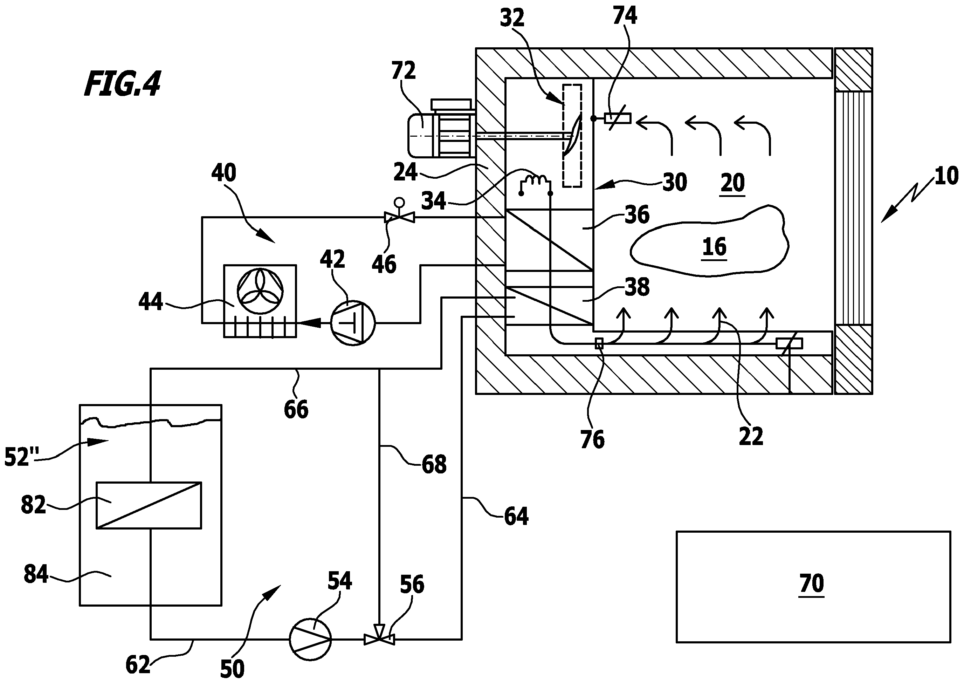

Bei einem dritten Ausführungsbeispiel einer erfindungsgemäßen Prüfanlage, dargestellt in Fig. 4, durchströmt das Wärmeträgermedium im Pufferspeicher 52" einen Wärmeaustauscher 82, welcher von einem flüssigen Wärmespeichermedium 84 umgeben ist.

Dieses flüssige Wärmespeichermedium 84 kann beispielsweise im einfachsten Fall Wasser sein, das mehr oder weniger auf einer der Mitteltemperatur Tₘᵢₜₜ entsprechenden Temperatur von 20°C vorliegt, und über den Wärmeaustauscher 82 Wärme aus dem Wärmeträgermedium, welches im Pufferkreislauf 50 umgewälzt wird, aufnimmt oder Wärme an diesen abgibt, wobei bei einer ausreichend großen Menge des Wärmeträgermediums 84 dessen Temperatur im Wesentlichen konstant bleibt und geringfügig von der Mitteltemperatur Tₘᵢₜₜ abweicht.

Im Übrigen arbeitet das dritte Ausführungsbeispiel gemäß Fig. 4 in gleicher Weise wie das erste Ausführungsbeispiel, so dass vollinhaltlich auf die Ausführungen zum ersten Ausführungsbeispiel Bezug genommen werden kann.

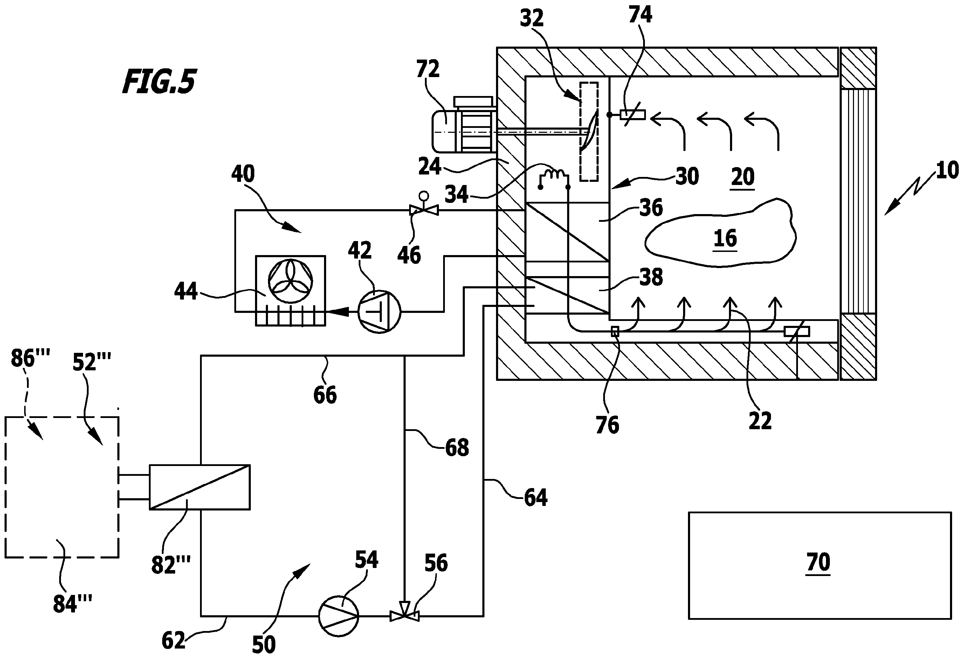

Bei einem vierten Ausführungsbeispiel einer erfindungsgemäßen Prüfanlage, dargestellt in Fig. 5, sind diejenigen Elemente, die mit denen der voranstehenden Ausführungsbeispiele identisch sind, mit denselben Bezugszeichen versehen, so dass auf die voranstehende Beschreibung derselben vollinhaltlich Bezug genommen werden kann.

Im Gegensatz zum dritten Ausführungsbeispiel ist der Wärmeaustauscher 82"' von Kühlwasser 84"' eines externen Kühlwassersystems 86"' durchströmt, so dass das Kühlwasser 84"' eines externen Kühlwassersystems, beispielsweise eines Kühlwassersystems eine Gebäudekomplexes, als Wärmespeichermedium eingesetzt werden kann, wobei das Kühlwasser dann eine Temperatur im Bereich der Mitteltemperatur Tₘᵢₜₜ aufweisen muss, d.h. von der Mitteltemperatur um maximal ±10K, noch besser ±5K, abweicht.

Im Übrigen arbeitet das vierte Ausführungsbeispiel gemäß Fig. 5 in gleicher Weise wie das erste Ausführungsbeispiel, so dass vollinhaltlich auf die Ausführungen zum ersten Ausführungsbeispiel Bezug genommen werden kann.

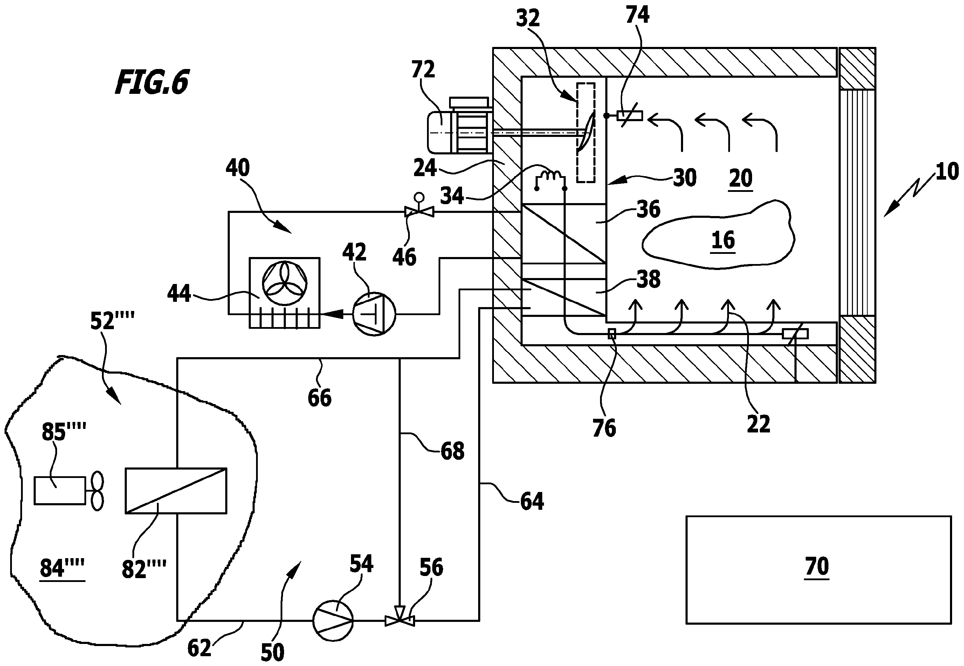

Bei einem fünften Ausführungsbeispiel einer erfindungsgemäßen Prüfanlage, dargestellt in Fig. 6, sind diejenigen Elemente, die mit denen der voranstehenden Ausführungsbeispiele identisch sind, mit denselben Bezugszeichen versehen, so dass auf die voranstehende Beschreibung derselben vollinhaltlich Bezug genommen werden kann.

Im Gegensatz zu den voranstehenden Ausführungsbeispielen ist der Pufferspeicher 52"" mit einem Wärmeaustauscher 82"" versehen, welcher einen Wärmeaustausch zwischen dem Wärmeträgermedium des Pufferkreislaufs 50 und einem Luftvolumen als Wärmespeichermedium 84"" bewirkt, wobei das Luftvolumen 84"" insbesondere noch an einen dieses umschließenden Gebäudekörper thermisch ankoppelt.

Die Luft des Luftvolumens 84"" lässt sich insbesondere durch eine Gebläseeinheit 85"" umwälzen, so dass ein Strom von Luft den Wärmeaustauscher 82"" durchströmt.

Dabei kann das Luftvolumen 84"" beispielsweise das Luftvolumen eines Raumes sein, in dem die Prüfanlage aufgestellt ist, und der Gebäudekörper kann durch den den Raum umschließenden oder bildenden Gebäudeteil gebildet sein, wobei dann das Luftvolumen und der mit dem Luftvolumen thermisch gekoppelte Gebäudeteil das Wärmespeichermedium bilden.

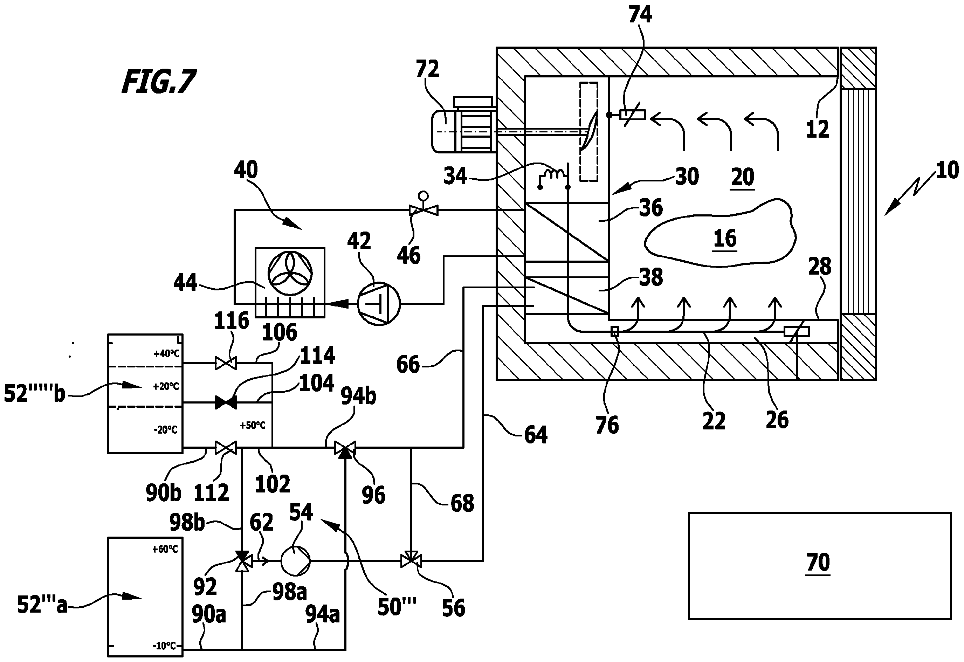

Im Übrigen arbeitet das fünfte Ausführungsbeispiel gemäß Fig. 4 in gleicher Weise wie das erste Ausführungsbeispiel, so dass vollinhaltlich auf die Ausführungen zum ersten Ausführungsbeispiel Bezug genommen werden kann. Bei einem sechsten Ausführungsbeispiel einer erfindungsgemäßen Prüfanlage, dargestellt in Fig. 7, sind diejenigen Elemente, die mit denen der voranstehenden Ausführungsbeispiele identisch sind, mit denselben Bezugszeichen versehen, so dass auf die Beschreibung derselben vollinhaltlich Bezug genommen werden kann.

Im Gegensatz zu den voranstehenden Ausführungsbeispielen ist der Pufferkreislauf 50"'" insoweit komplexer ausgebildet, als dieser zwei Pufferspeicher 52"'"a und 52""'b aufweist, die beide als Schichtwärmespeicher ausgebildet sind, das heißt, dass in diesen das Wärmespeichermedium, welches beispielsweise gleich dem Wärmeträgermedium sein soll, in unterschiedlichen Schichtungen mit unterschiedlichen Temperaturen vorliegt.

Sowohl der Pufferspeicher 52""'a als auch der Pufferspeicher 52""'b haben einen Bodenanschluss 90a und 90b, der über ein Dreiwegeventil 92 mit der zur Umwälzpumpe 54 führenden Saugleitung 62 verbindbar ist.

Ferner ist jeder der Bodenanschlüsse 90a und 90b mit einer Füllleitung 94a und 94b verbindbar, wobei beide Füllleitungen 94a und 94b über ein Dreiwegeventil 96 mit der Wärmeaustauscherrückleitung 66 verbindbar sind. Außerdem sind die Füllleitungen 94a, 94b mittels Anschlussleitungen 98a, 98b mit einem Dreiwegeventil 92 verbunden.

Zusätzlich verzweigt die Füllleitung 94b in eine untere Füllleitung 102, eine mittlere Füllleitung 104 und eine obere Füllleitung 106, wobei jede dieser Füllleitungen mit einem Absperrorgan 112, 114 bzw. 116 versehen ist.

Die beiden Pufferspeicher 52""'a und 52""'b lassen sich nun mit dem Pufferkreislauf 50"' wie folgt befüllen und entleeren.

Zum Aufwärmen des Stroms 22 des gasförmigen Prüfmediums wird ausgehend von einem vollständig gefüllten Pufferspeicher 52""'a, in dem schichtweise von unten nach oben das Wärmeträgermedium mit zunehmender Temperatur vorliegt, beispielsweise mit Temperaturen von -10°C nahe des Bodenanschlusses 90a und +60°C auf einer dem Bodenanschluss 90a abgewandten Seite, durch geeignetes Einstellen des Dreiwegeventils 92 das Wärmeträgermedium entnommen und über die Anschlussleitung 98a, die Saugleitung 62, die Umwälzpumpe 54 und die Wärmeaustauscherzuleitung 64 dem Wärmeaustauscher 38 zugeführt.

Das Wärmeträgermedium wird dabei im Wärmeaustauscher 38 abgekühlt und strömt über die Wärmeaustauscherrückleitung 66 zurück, wobei das Dreiwegeventil 96 so gestellt ist dass das Wärmeträgermedium zu der Füllleitung 94b strömt und das Absperrorgan 112 geöffnet ist, während die Absperrorgane 114 und 116 geschlossen sind, so dass das abgekühlte Wärmeträgermedium in dem Pufferspeicher 52""'b über den Bodenanschluss 90b einströmt und eine untere Schicht bildet, die beispielsweise eine Temperatur von -20°C aufweist.

Dieses Befüllen der jeweils untersten Schicht des Wärmeträgermediums im Pufferspeicher 52""'b erfolgt so lange, bis eine nennenswerte Schichthöhe, die der Anlagensteuerung 70 vorgebbar ist, erreicht ist. Durch das sukzessive Entleeren des Pufferspeichers 52""'a werden jedoch immer wärmer werdende Schichten des Wärmeträgermediums entnommen, so dass auch stets wärmeres Wärmeträgermedium den Wärmeaustauscher 38 durchströmt und in diesem abgekühlt wird. Aus diesem Grund wird nach einer gewissen Zeit das Absperrorgan 112 geschlossen und das Absperrorgan 114 geöffnet, so dass über die Füllleitung 104 nunmehr das wärmere Wärmeträgermedium als nächste obere Schicht mit höherer Temperatur in den Pufferspeicher 52""'b einströmen kann und dort eine wärmere Schicht ausbilden kann, die beispielsweise im Pufferspeicher 52""'b bei +20°C vorliegt.

Wird weiter aus dem Pufferspeicher 52""'a Wärmeträgermedium entnommen, so wird schließlich zum Schluss Wärmeträgermedium bei einer Temperatur von ungefähr +60°C entnommen, durch den Wärmeaustauscher 38 hindurchgefördert und durch Schließen der Absperrorgane 112 und 114 und Öffnen des Absperrorgans 116 dem Pufferspeicher 52""'b als oberste Schicht zugeführt, wobei diese oberste Schicht des Wärmeträgermediums beispielsweise eine Temperatur von +40°C aufweist.

Ist der Pufferspeicher 52""'a vollständig entleert, so schaltet die Anlagensteuerung 70 den Pufferkreislauf 50"' ab und das Wärmeträgermedium wird in dem Pufferspeicher 52""'b gespeichert.

Soll nun nachfolgend eine Abkühlung des Stroms 22 des gasförmigen Prüfmediums von +80°C erfolgen, so wird das Dreiwegeventil 96 so gestellt, dass die Füllleitung 94a mit der Wärmeaustauscherrückleitung 66 verbunden wird und somit das aus dem Wärmeaustauscher 38 zurückströmende Wärmeträgermedium über den Bodenanschluss 90a in den Pufferspeicher 52""'a eingeleitet wird, der zu Beginn des Abkühlens leer ist und kein Wärmeträgermedium enthält.

Dagegen wird das Wärmeträgermedium aus dem Pufferspeicher 52""'b entnommen, wobei zunächst das wärmste Wärmeträgermedium, entnommen wird, und zwar durch Öffnen des Absperrorgans 116, so dass dieses über die Anschlussleitung 98b zum Dreiwegeventil 92 strömt, welches so umgestellt ist, dass über die Saugleitung 62 das Wärmeträgermedium aus dem Pufferspeicher 52""'b mittels der Füllleitung 106 entnommen wird.

Dieses Wärmeträgermedium wird in dem Wärmeaustauscher 38 weiter aufgeheizt und erhält beispielsweise eine Temperatur von +60°C, so dass die erste Schicht von Wärmeträgermedium, die im Pufferspeicher 52""'a gespeichert wird, eine Temperatur von +60°C aufweist.

Ist die oberste Schicht des Pufferspeichers 52""'b entleert, wird das Absperrorgan 116 geschlossen und das Absperrorgan 114 geöffnet, so dass über die Füllleitung 104 die nächstkältere Schicht des Wärmeträgermediums aus dem Pufferspeicher 52""'b entnommen und mittels der Umwälzpumpe 54 dem Wärmeaustauscher 38 zugeführt wird, wobei diese Schicht von kälterem Wärmeträgermedium beispielsweise bei einer Temperatur von +40°C durch den Bodenanschluss 90a dem Pufferspeicher 52""'a zugeführt wird, wobei sich in diesem unter der Schicht von Wärmeträgermedium mit ungefähr +60°C die nächste Schicht von Wärmeträgermedium mit der Temperatur +40°C bildet. Ist die entsprechende Schicht von Wärmeträgermedium im Pufferspeicher 52""'b entleert, wird das Absperrorgan 112 geöffnet und die unterste Schicht von Wärmeträgermedium aus dem Pufferspeicher 52""'b entnommen, im Wärmeaustauscher 38 erwärmt und in dem Pufferspeicher 52""'a zurückgeführt und über den Bodenanschluss 90a als unterste Schicht im Pufferspeicher 52""'a gespeichert, so dass eine Schichtung von Wärmeträgermedium im Pufferspeicher 52""'a vorliegt, die der Schichtung entspricht, mit welcher erneut das bereits beschriebene Aufwärmen des Stroms 22 von gasförmigem Prüfmedium in der Prüfkammer 10 wieder beginnen kann.

Im Zusammenhang mit den bislang beschriebenen Ausführungsbeispielen von erfindungsgemäßen Prüfanlagen wurde von einer Ausführungsform des Kühlkreislaufes 40 ausgegangen.

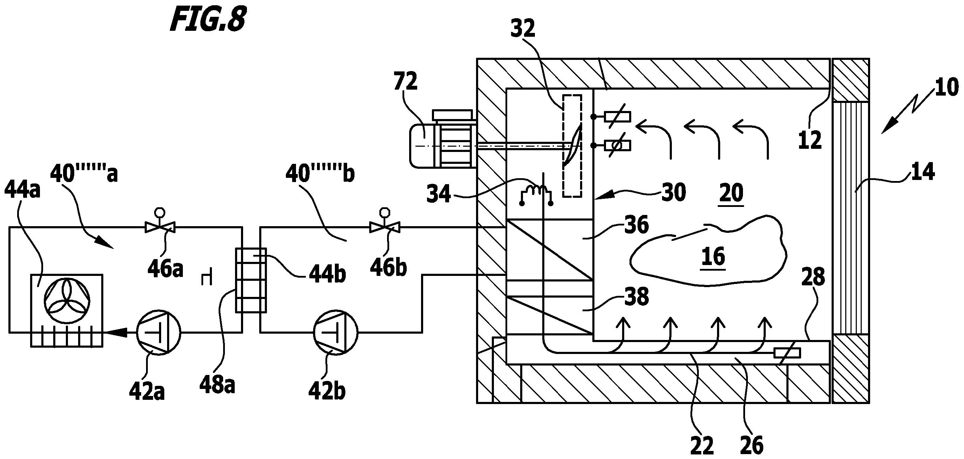

Bei einem siebten Ausführungsbeispiel, dargestellt in Fig. 8, ist eine Variante eines derartigen Kühlkreislaufes dargestellt, der zwei Kühlkreisläufe 40"""a und 40"""b umfasst, die miteinander gekoppelt sind, um mit dem Verdampfer 36 der Temperiereinheit 30 noch tiefere Temperaturen als beispielsweise -40°C zu erreichen.

Hierzu umfasst der erste Kühlkreislauf 40"""a den Kältemittelverdichter 42a, den Kondensor 44a und das Drosselorgan 46a, das in diesem Fall jedoch nicht das expandierte Kältemittel unmittelbar dem Verdampfer 36 zuführt, sondern einem Verdampfer 48a, der mit einem Verflüssiger 44b des zweiten Kühlkreislaufs 40"""b einen Wärmeaustauscher bildet, so dass der zweite Kühlkreislauf 40"""b in der Lage ist, noch tiefere Temperaturen zu erreichen, wobei der zweite Kühlkreislauf 40"""b den Kältemittelverdichter 42b aufweist, und mit dem Verdampfer 48a gekoppelten Verflüssiger 44b, das Drosselorgan 46b, welches dann das verflüssigte Kältemittel dem Verdampfer 36 in der Temperiereinheit 30 zuführt, um die tieferen Temperaturen zu erreichen.

In der Temperiereinheit 30 ist neben dem Verdampfer 36 aber auch noch der Wärmeaustauscher 38 angeordnet, der nun mit den unterschiedlichsten Pufferkreisläufen gekoppelt sein kann, die im Zusammenhang mit dem ersten bis vierten Ausführungsbeispiel vorstehend im Detail beschrieben wurden, so dass diese auch zeichnerisch nicht mehr in Fig. 6 dargestellt sind, sondern lediglich noch der in der Temperiereinheit 30 vorgesehene Wärmeaustauscher 38.

Im Übrigen umfasst das siebte Ausführungsbeispiel gemäß Fig. 8 dieselben Elemente, wie die voranstehenden sechs Ausführungsbeispiele, die auch mit denselben Bezugszeichen versehen sind, so dass hinsichtlich der Beschreibung dieser Elemente vollinhaltlich auf die Ausführungen zu den voranstehenden Ausführungsbeispielen verwiesen werden kann.

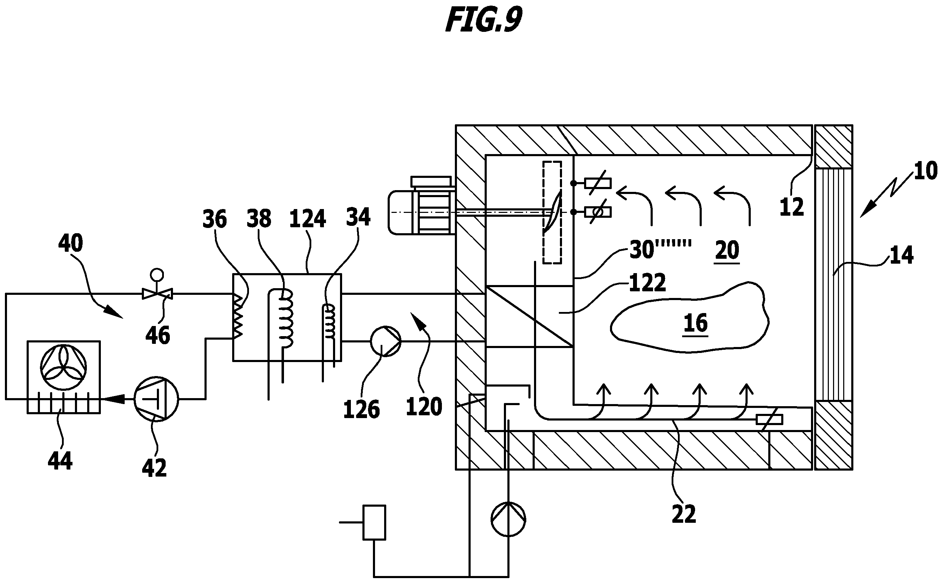

Bei einem achten Ausführungsbeispiel einer erfindungsgemäßen Prüfanlage, dargestellt in Fig. 9 ist die Temperiereinheit 30"""' mit einem Zwischenkreislauf 120 versehen, in welchem einerseits ein prüfkammerseitiger Wärmeaustauscher 122 angeordnet ist und andererseits ein außerhalb der Prüfkammer 10 angeordneter externen Wärmeaustauscher 124 und welcher eine Umwälzpumpe 126 aufweist, die ihrerseits ein Zwischenwärmeträgermedium zwischen dem externen Wärmeaustauscher 124 und dem prüfkammerseitigen Wärmeaustauscher 122 zirkulieren lässt.

Bei diesem Ausführungsbeispiel sind die Heizeinheit 34, der Verdampfer 36 des Kühlkreislaufs 40 und der Wärmeaustauscher 38 des Pufferkreislaufs 50 mit dem externen Wärmeaustauscher 124 gekoppelt, insbesondere in diesen integriert, so dass das Zwischenwärmeträgermedium im externen Wärmeaustauscher 124 durch die Heizeinheit 34 aufgeheizt, durch den Verdampfer 36 gekühlt und durch den Wärmeaustauscher 38 erwärmt oder gekühlt werden kann, wie dies im Zusammenhang mit der Temperiereinheit 30 bei den ersten sechs Ausführungsbeispielen erläutert wurde.

Der Kühlkreislauf 40 und der Verdampfer 36 können dabei entsprechend dem ersten bis sechsten Ausführungsbeispiel ausgebildet sein.

Ferner kann die Heizeinheit 34 dieselbe sein, wie im Zusammenhang mit dem ersten bis sechsten Ausführungsbeispiel beschrieben.

Außerdem kann der Wärmeaustauscher 38 mit den Pufferkreisläufen 50 gemäß dem ersten bis sechsten Ausführungsbeispiel gekoppelt sein.

Der Vorteil dieser Lösung ist darin zu sehen, dass bei dieser lediglich ein einziger prüfkammerseitiger Wärmeaustauscher 122 erforderlich ist, im Übrigen im externen Wärmeaustauscher 124 die Wärmezufuhr und/oder -abfuhr über die Heizeinheit 34, den Verdampfer 36 bzw. den Wärmeaustauscher 38 wie in der beschriebenen Art und Weise erfolgt.

## Patentansprüche

1. Prüfanlage umfassend eine Prüfkammer (10) zur Aufnahme von zu testenden Objekten (16), in welcher mindestens eine Temperiereinheit für ein in der Prüfkammer (10) vorhandenes gasförmiges Prüfmedium vorgesehen ist, um das Prüfmedium entsprechend vorgebbaren Prüfzyklen aufzuheizen und abzukühlen,
wobei der Temperiereinheit (30) ein in einem Pufferkreislauf (50) angeordneter Wärmeaustauscher (38) zugeordnet ist, wobei das Wärmeträgermedium im Pufferkreislauf bei der Minimaltemperatur des Prüfzyklus noch flüssig ist und bei der Maximaltemperatur des Prüfzyklus möglichst nicht verdampft, wobei in dem Pufferkreislauf (50) mindestens ein Pufferspeicher (52) und eine Umwälzeinheit (54) zum Umwälzen eines Wärmeträgermediums vorgesehen sind und wobei mittels des Pufferkreislaufs (50) beim Aufheizen des Prüfmediums dem der Temperiereinheit (30) zugeordneten Wärmeaustauscher (38) Wärme aus dem mindestens einen Pufferspeicher (52) zugeführt wird und mittels des Pufferkreislaufs (50) beim Abkühlen des Prüfmediums dem der Temperiereinheit (30) zugeordneten Wärmeaustauscher (38) Wärme entzogen und an den mindestens einen Pufferspeicher (52) abgegeben wird.

2. Prüfanlage nach Anspruch 1, **dadurch gekennzeichnet, dass** der mindestens eine Pufferspeicher (52) bei einer Temperaturänderung von 10K oder weniger, insbesondere 5K oder weniger, eine Wärmespeicherkapazität aufweist, die mindestens die Hälfte der Wärmespeicherkapazität der Prüfkammer (10) mit Temperiereinheit (30) und der Wärmespeicherkapazität des zu testenden Objekts (16) über die gesamte Temperaturdifferenz von der Minimaltemperatur (Tₘᵢₙ) bis zur Maximaltemperatur (Tₘₐₓ) beträgt.

3. Prüfanlage nach einem der voranstehenden Ansprüche, **dadurch gekennzeichnet, dass** der mindestens eine Pufferspeicher (52) in einem Temperaturbereich arbeitet, der zwischen 20% und 80% der Temperaturdifferenz zwischen einer Minimaltemperatur (Tₘᵢₙ) und einer Maximaltemperatur (Tₘₐₓ) der Prüfzyklen (PZ) liegt.

4. Prüfanlage nach einem der voranstehenden Ansprüche, **dadurch gekennzeichnet, dass** in dem mindestens einen Pufferspeicher (52) das Wärmeträgermedium als Wärmespeichermedium gespeichert ist.

5. Prüfanlage nach einem der voranstehenden Ansprüche, **dadurch gekennzeichnet, dass** in dem mindestens einen Pufferspeicher (52) als Wärmespeichermedium (80) ein von dem Wärmeträgermedium verschiedenes Medium vorgesehen ist.

6. Prüfanlage nach einem der voranstehenden Ansprüchen, **dadurch gekennzeichnet**, das der Wärmeaustauscher (38) von einem Strom (22) des gasförmigen Prüfmediums durchströmt ist.

7. Prüfanlage nach einem der Ansprüche 1 bis 5, **dadurch gekennzeichnet, dass** der Wärmeaustauscher (38) einem Zwischenkreislauf (120) der Temperiereinrichtung (30) zugeordnet ist und dass eine Temperierung des Stroms (22) des gasförmigen Prüfmediums durch den Zwischenkreislauf (120) erfolgt.

8. Prüfanlage nach einem der voranstehenden Ansprüche, **dadurch gekennzeichnet, dass** der Pufferkreislauf (50) mit Mengensteuerelementen (54, 56, 68) versehen ist, mit welchen die Menge pro Zeiteinheit des den Wärmeaustauscher (38) durchströmenden Wärmeträgermediums steuerbar ist, und dass insbesondere die Mengensteuerelemente (54, 56, 68) zur Regelung der Temperatur des Prüfmediums im Verlauf eines Prüfzyklus (PZ) mit einer Anlagensteuerung (70) zusammenwirken.

9. Prüfanlage nach einem der voranstehenden Ansprüche, **dadurch gekennzeichnet, dass** mit der Temperiereinheit (30) das gasförmige Prüfmedium kühlbar ist, dass insbesondere die Temperiereinheit (30) mit einem Kühlkreislauf (40) zusammenwirkt, und dass insbesondere der Temperiereinheit (30) ein in dem Kühlkreislauf (40) angeordneter Verdampfer (36) zugeordnet ist.

10. Prüfanlage nach Anspruch 9, **dadurch gekennzeichnet, dass** der Verdampfer (36) von einem Strom (22) des gasförmigen Prüfmediums durchströmt ist.

11. Prüfanlage nach Anspruch 9, **dadurch gekennzeichnet, dass** der Verdampfer (36) einem Zwischenkreislauf (120) der Temperiereinrichtung (30) zugeordnet ist und dass eine Temperierung des Stroms (22) des gasförmigen Prüfmediums durch den Zwischenkreislauf (120) erfolgt.

12. Prüfanlage nach einem der voranstehenden Ansprüche, **dadurch gekennzeichnet, dass** mit der Temperiereinheit (30) das gasförmige Prüfmedium aufheizbar ist, dass insbesondere der Temperiereinheit (30) eine Heizeinheit (34) zugeordnet ist, und dass insbesondere die Heizeinheit (34) von einem Strom (22) des gasförmigen Prüfmediums durchströmt ist.

13. Prüfanlage nach einem der voranstehenden Ansprüche, **dadurch gekennzeichnet, dass** das Wärmeträgermedium des Pufferkreislaufs (50) eine Mischung aus Wasser und Glykol oder ein Öl umfasst.

14. Prüfanlage nach einem der voranstehenden Ansprüche, **dadurch gekennzeichnet, dass** eine Anlagensteuerung (70) vorgesehen ist, welche die Heizeinheit (34), den Kühlkreislauf (40) und den Pufferkreislauf (50) steuert.

15. Verfahren zum Betreiben einer Prüfanlage, insbesondere nach einem der Ansprüche 1 bis 14, mit einer Prüfkammer (10) zur Aufnahme von zu testenden Objekten (16), in welcher ein gasförmiges Prüfmedium umgewälzt und mittels einer Temperiereinheit (30) entsprechend vorgebbaren Prüfzyklen (PZ) aufgeheizt und abgekühlt wird, wobei dem gasförmigen Prüfmedium beim Abkühlen Wärme entzogen und in einem in einem Pufferkreislauf angeordneten Pufferspeicher (52) gespeichert wird und wobei dem gasförmigen Prüfmedium beim Aufwärmen Wärme aus dem Pufferspeicher (52) zugeführt wird, und das Wärmeträgermedium in dem Pufferkreislauf (50) bei der Minimaltemperatur des Prüfzyklus noch flüssig ist und bei der Maximaltemperatur des Prüfzyklus möglichst nicht verdampft.

## Claims

1. Testing device comprising a test chamber (10) for accommodating objects (16) to be tested, at least one temperature control unit for a gaseous test medium present in the test chamber (10) being provided therein in order to heat up and cool down the test medium in accordance with predeterminable test cycles,
wherein a heat exchanger (38) arranged in a buffer circuit (50) is associated with the temperature control unit (30), wherein the heat transfer medium in the buffer circuit is still liquid at the minimum temperature of the test cycle and as far as possible does not evaporate at the maximum temperature of the test cycle, wherein at least one buffer storage device (52) and a circulating unit (54) for circulating a heat transfer medium are provided in the buffer circuit (50) and wherein heat from the at least one buffer storage device (52) is supplied to the heat exchanger (38) associated with the temperature control unit (30) by way of the buffer circuit (50) during the heating up of the test medium and heat is withdrawn from the heat exchanger (38) associated with the temperature control unit (30) by way of the buffer circuit (50) during the cooling down of the test medium and transferred to the at least one buffer storage device (52).

2. Testing device as defined in claim 1, **characterized in that** at a change in temperature of 10K or less, in particular 5K or less, the at least one buffer storage device (52) has a heat storage capacity amounting to at least half the heat storage capacity of the test chamber (10) with temperature control unit (30) and of the heat storage capacity of the object (16) to be tested over the entire difference in temperature from the minimum temperature (Tₘᵢₙ) to the maximum temperature (Tₘₐₓ).

3. Testing device as defined in either one of the preceding claims, **characterized in that** the at least one buffer storage device (52) operates in a temperature range of between 20% and 80% of the difference in temperature between a minimum temperature (Tₘᵢₙ) and a maximum temperature (Tₘₐₓ) of the test cycles (PZ).

4. Testing device as defined in any one of the preceding claims, **characterized in that** the heat transfer medium is stored in the at least one buffer storage device (52) as heat storage medium.

5. Testing device as defined in any one of the preceding claims, **characterized in that** a medium different to the heat transfer medium is provided as heat storage medium (80) in the at least one buffer storage device (52).

6. Testing device as defined in any one of the preceding claims, **characterized in that** the heat exchanger (38) has a stream (22) of the gaseous test medium flowing through it.

7. Testing device as defined in any one of claims 1 to 5, **characterized in that** the heat exchanger (38) is associated with an intermediate circuit (120) of the temperature control device (30) and that the temperature of the stream (22) of gaseous test medium is controlled by the intermediate circuit (120).

8. Testing device as defined in any one of the preceding claims, **characterized in that** the buffer circuit (50) is provided with quantity control elements (54, 56, 68), the quantity of the heat transfer medium flowing through the heat exchanger (38) per unit of time being controllable with said elements, and that the quantity control elements (54, 56, 68) interact, in particular, with a device control (70) in order to regulate the temperature of the test medium during the course of a test cycle (PZ).

9. Testing device as defined in any one of the preceding claims, **characterized in that** the gaseous test medium is coolable with the temperature control unit (30), that the temperature control unit (30) interacts, in particular, with a cooling circuit (40), and that an evaporator (36) arranged in the cooling circuit (40) is associated, in particular, with the temperature control unit (30).

10. Testing device as defined in claim 9, **characterized in that** the evaporator (36) has a stream (22) of the gaseous test medium flowing through it.

11. Testing device as defined in claim 9, **characterized in that** the evaporator (36) is associated with an intermediate circuit (120) of the temperature control device (30) and that the temperature of the stream (22) of gaseous test medium is controlled by the intermediate circuit (120).

12. Testing device as defined in any one of the preceding claims, **characterized in that** the gaseous test medium is heatable with the temperature control unit (30), that a heating unit (34) is associated, in particular, with the temperature control unit (30) and that the heating unit (34) has, in particular, a stream (22) of the gaseous test medium flowing through it.

13. Testing device as defined in any one of the preceding claims, **characterized in that** the heat transfer medium of the buffer circuit (50) comprises a mixture of water and glycol or an oil.

14. Testing device as defined in any one of the preceding claims, **characterized in that** a device control (70) is provided for controlling the heating unit (34), the cooling circuit (40) and the buffer circuit (50).

15. Method of operating a testing device, in particular as defined in any one of claims 1 to 14, comprising a test chamber (10) for accommodating objects (16) to be tested, a gaseous test medium being circulated in said test chamber and heated up and cooled down by way of a temperature control unit (30) in accordance with predeterminable test cycles (PZ), wherein heat is withdrawn from the gaseous test medium during cooling down and stored in a buffer storage device (52) arranged in a buffer circuit and wherein heat is supplied to the gaseous test medium from the buffer storage device (52) during heating up and the heat transfer medium in the buffer circuit (50) is still liquid at the minimum temperature of the test cycle and as far as possible does not evaporate at the maximum temperature of the test cycle.

## Revendications

1. Installation d'essai comprenant une chambre de test (10) destinée à accueillir des objets à tester (16) et dans laquelle est prévue au moins une unité d'équilibrage de la température pour un fluide d'essai gazeux présent dans la chambre de test (10) afin de chauffer et de refroidir celui-ci en fonction de cycles de test prédéfinissables, dans laquelle un échangeur de chaleur (38), disposé dans un circuit tampon (50), est dédié à l'unité d'équilibrage de la température (30), le fluide caloporteur se trouvant dans le circuit tampon étant encore fluide à la température minimale du cycle de test et si possible non vaporisé à la température maximale du cycle de test, au moins un réservoir tampon (52) et une unité de recirculation (54) étant prévus dans le circuit tampon (50) pour faire recirculer un fluide caloporteur, et de la chaleur étant acheminée, depuis l'au moins un réservoir tampon (52) vers l'échangeur de chaleur (38) dédié à l'unité d'équilibrage de la température (30) au moyen du circuit tampon (50) lors du chauffage du fluide d'essai et de la chaleur étant retirée de l'échangeur de chaleur (38) dédié à l'unité d'équilibrage de la température (30) au moyen du circuit tampon (50) lors du refroidissement du fluide d'essai et délivrée à l'au moins un réservoir tampon (52).

2. Installation de test selon la revendication 1, **caractérisée en ce que** l'au moins un réservoir tampon (52), lors d'une modification de la température de 10 K ou moins, en particulier de 5 K ou moins, présente une capacité de stockage de la chaleur égale à au moins la moitié de la capacité de stockage de la chaleur de la chambre de test (10) avec unité d'équilibrage de la température (30) et de la capacité de stockage de la chaleur de l'objet à tester (16), sur toute la différence de température entre la température minimale (Tₘᵢₙᵢ) et la température maximale (Tₘₐₓᵢ).

3. Installation de test selon l'une quelconque des revendications précédentes, **caractérisée en ce que** l'au moins un réservoir tampon (52) fonctionne dans une plage de température comprise entre 20 % et 80 % de la différence de température entre une température minimale (Tₘᵢₙ) et une température maximale (Tₘₐₓᵢ) des cycles de test (PZ).

4. Installation de test selon l'une quelconque des revendications précédentes, **caractérisée en ce que** le fluide caloporteur est stocké dans l'au moins un réservoir tampon (52) en tant que fluide accumulateur de chaleur.

5. Installation de test selon l'une quelconque des revendications précédentes, **caractérisée en ce que** l'au moins un réservoir tampon (52) comporte un fluide différent du fluide caloporteur en tant que fluide accumulateur de chaleur (80).

6. Installation de test selon l'une quelconque des revendications précédentes, **caractérisée en ce que** l'échangeur de chaleur (38) est traversé par un courant (22) de fluide d'essai gazeux.

7. Installation de test selon l'une quelconque des revendications 1 à 5, **caractérisée en ce que** l'échangeur de chaleur (38) est dédié à un circuit intermédiaire (120) du dispositif d'équilibrage de la température (30) et **en ce qu'**un équilibrage de la température du courant (22) de fluide d'essai gazeux est assuré par le circuit intermédiaire (120).

8. Installation de test selon l'une quelconque des revendications précédentes, **caractérisée en ce que** le circuit tampon (50) est doté d'éléments de pilotage de la quantité (54, 56, 58) permettant de piloter la quantité par unité de temps du fluide caloporteur traversant l'échangeur de chaleur (38), et **en ce que**, en particulier, les éléments de pilotage de la quantité (54, 56, 58) coopèrent avec une commande de l'installation (70) pour régler la température du fluide d'essai au cours d'un cycle de test (PS).

9. Installation de test selon l'une quelconque des revendications précédentes, **caractérisée en ce que** le fluide d'essai gazeux peut être refroidi avec l'unité d'équilibrage de la température (30), **en ce que**, en particulier, l'unité d'équilibrage de la température (30) coopère avec un circuit de refroidissement (40), et **en ce qu'**un évaporateur (36), disposé dans le circuit de refroidissement, est dédié, en particulier, à l'unité d'équilibrage de la température (30).

10. Installation de test selon la revendication 9, **caractérisée en ce que** l'évaporateur (36) est traversé par un courant (22) de fluide d'essai gazeux.

11. Installation de test selon la revendication 9, **caractérisée en ce que** l'évaporateur (36) est dédié à un circuit intermédiaire (120) du dispositif d'équilibrage de la température (30), et **en ce qu'**un équilibrage de la température du courant (22) de fluide d'essai gazeux est assuré par le circuit intermédiaire (120) .

12. Installation de test selon l'une quelconque des revendications précédentes, **caractérisée en ce que** le fluide d'essai gazeux peut être chauffé avec l'unité d'équilibrage de la température (30), **en ce qu'**une unité de chauffage (34) est dédiée, en particulier, à l'unité d'équilibrage de la température (30), et **en ce que**, en particulier, l'unité de chauffage (34) est traversée par un courant (22) de fluide d'essai gazeux.

13. Installation de test selon l'une quelconque des revendications précédentes, **caractérisée en ce que** le fluide caloporteur du circuit tampon (50) comprend un mélange d'eau et de glycol ou une huile.

14. Installation de test selon l'une quelconque des revendications précédentes, **caractérisée en ce qu'**elle comporte une commande (70) qui commande l'unité de chauffage (34), le circuit de refroidissement (40) et le circuit tampon (50).

15. Procédé destiné à l'exploitation d'une installation de test, en particulier selon l'une quelconque des revendications 1 à 14, équipée d'une chambre de test (10) destinée à accueillir des objets à tester (16) et dans laquelle un fluide d'essai gazeux est recirculé et chauffé et refroidi au moyen d'une unité d'équilibrage de la température (30) conformément à des cycles de test (PZ) prédéfinissables, de la chaleur étant retirée du fluide d'essai gazeux lors du refroidissement et stockée dans un réservoir tampon (52) disposé dans un circuit tampon et de la chaleur étant acheminée vers le fluide d'essai gazeux, lors du chauffage, depuis le réservoir tampon (52), et le fluide caloporteur dans le circuit tampon (50) étant encore liquide à la température minimale du cycle de test et si possible non évaporé à la température maximale du cycle de test.
